# EUROPÄISCHE PATENTANMELDUNG

(11) **EP 3 831 598 A1**
(43) Veröffentlichungstag der Anmeldung: **09.06.2021**
(21) Anmeldenummer: 19212957.5
(22) Anmeldetag: 02.12.2019
(51) Int. Cl.: B32B 17/10, G02B 27/01

(54) **VERBUNDSCHEIBE UND PROJEKTIONSANORDNUNG FÜR EIN HEAD-UP-DISPLAY**

(71) Anmelder: SAINT-GOBAIN GLASS FRANCE, 92400 Courbevoie (FR)
(72) Erfinder: KREKEL, Daniel, 52064 Aachen (DE); SCHULZ, Valentin, 52382 Niederzier (DE)
(74) Vertreter: Schönen, Iris

(57) **Zusammenfassung**

Die Erfindung betrifft eine Verbundscheibe (10) mit einer Oberkante (O) und einer Unterkante (U), umfassend mindestens eine Außenscheibe (15) und mindestens eine Innenscheibe (20), wobei die Außenscheibe (15) und die Innenscheibe (20) mittels einer thermoplastischen Zwischenschicht (25) miteinander verbunden sind. Erfindungsgemäß nimmt die Dicke (D) der Außenscheibe (15) im vertikalen Verlauf (V) von der Unterkante (U) zur Oberkante (O) zumindest abschnittsweise zu oder ab und ist die Innenscheibe (20) eine chemisch vorgespannte Scheibe.

## Beschreibung

Die Erfindung betrifft eine Verbundscheibe und eine Projektionsanordnung für ein Head-up-Display, ein Verfahren zur Herstellung der Verbundscheibe sowie dessen Verwendung.

Kraftfahrzeuge, insbesondere Personenkraftfahrzeuge werden in zunehmendem Maße mit Head-up-Displays ausgestattet. Mit einem Projektor, der sich beispielsweise im Bereich des Armaturenbretts oder im Dachbereich befindet, werden Bilder auf die Windschutzscheibe projiziert, dort reflektiert und vom Fahrer als virtuelles Bild wahrgenommen. So können wichtige Informationen in das Blickfeld des Fahrers projiziert werden. Beispielsweise werden die aktuelle Fahrtgeschwindigkeit oder Navigations- und Warnhinweise mittels eines Head-up-Displays projiziert. Diese Hinweise können vom Fahrer wahrgenommen werden, ohne den Blick von der Fahrbahn wenden zu müssen. Head-up-Displays können somit wesentlich zur Steigerung der Verkehrssicherheit beitragen.

Bei einigen Head-up-Displays tritt unter Umständen das Problem auf, dass das Projektorbild an beiden Oberflächen, d. h. an der inneren sowie an der äußeren Oberfläche, der Windschutzscheibe reflektiert wird. Aus diesem Grund nimmt der Fahrer nicht nur das gewünschte Hauptbild wahr, sondern auch ein leicht versetztes, in der Regel intensitätsschwächeres Nebenbild. Dieses Nebenbild wird auch als Geisterbild bezeichnet.

Aus diesem Grund sind Verbundscheiben bekannt, die aus zwei Glasscheiben bestehen, die über eine thermoplastische Folie miteinander verbunden sind. Die thermoplastische Folie ist dabei keilförmig ausgebildet. Eine derartige Verbundscheibe hilft, das Entstehen sogenannter Geisterbilder zu unterdrücken. Das Geisterbild kann mit konstantem Keilwinkel nur für eine bestimmte Position der Augen des Betrachters unterbunden werden. In allen möglichen Augenpositionen abseits davon entsteht weiterhin ein Geisterbild, wenn auch abgeschwächt.

Es hat sich allerdings herausgestellt, dass derartige Verbundscheiben ein relativ hohes Gewicht aufweisen. Des Weiteren ist eine keilförmige thermoplastische Folie relativ aufwändig in ihrer Herstellung, so dass eine derartige Verbundscheibe insgesamt relativ teuer in der Herstellung ist.

Der Erfindung liegt die Aufgabe zu Grunde, eine verbesserte Verbundscheibe für ein Head-up-Display bereitzustellen, welche kostengünstiger und einfacher herzustellen ist als herkömmliche gattungsgemäße Verbundscheiben. Des Weiteren soll die Verbundscheibe ein relativ geringes Eigengewicht aufweisen.

Eine weitere Aufgabe der Erfindung ist es, eine entsprechend weiterentwickelte Projektionsanordnung für ein Head-up-Display bereitzustellen.

Ferner ist es Aufgabe der Erfindung, ein Verfahren zur Herstellung einer weiterentwickelten Verbundscheibe sowie eine Verwendung einer erfindungsgemäßen Verbundscheibe anzugeben.

Die Aufgabe der vorliegenden Erfindung wird erfindungsgemäß durch eine Verbundscheibe nach Anspruch 1, durch eine Projektionsanordnung gemäß Anspruch 8, durch ein Verfahren zur Herstellung einer Verbundscheibe nach Anspruch 9 sowie durch eine Verwendung einer Verbundscheibe nach Anspruch 10 gelöst. Bevorzugte Ausführungen gehen aus den Unteransprüchen hervor.

Die erfindungsgemäße Verbundscheibe weist eine Oberkante und eine Unterkante auf und umfasst mindestens eine Außenscheibe und mindestens eine Innenscheibe, wobei die Außenscheibe und die Innenscheibe mittels einer thermoplastischen Zwischenschicht miteinander verbunden sind.

Erfindungsgemäß nimmt die Dicke der Außenscheibe im vertikalen Verlauf von der Unterkante zur Oberkante zumindest abschnittsweise zu oder ab. Die Innenscheibe ist erfindungsgemäß eine chemisch vorgespannte Scheibe.

Mit Oberkante wird diejenige Seitenkante der Verbundscheibe bezeichnet, welche dafür vorgesehen ist, in Einbaulage nach oben zu weisen. Mit Unterkante wird diejenige Seitenkante der Verbundscheibe bezeichnet, welche dafür vorgesehen ist, in Einbaulage nach unten zu weisen. In Einbaulage ist der Abstand der Unterkante zur Bodenfläche dabei geringer als der Abstand der Oberkante zur Bodenfläche. Als Bodenfläche wird dabei die Auflagefläche bezeichnet, auf der der Gegenstand mit eingebauter Verbundscheibe angeordnet ist. Ist die Verbundscheibe eine Fahrzeugscheibe, beispielsweise die Windschutzscheibe eines Kraftfahrzeugs, so wird die Oberkante häufig als Dachkante und die Unterkante als Motorkante bezeichnet. Die Dachkante ist dabei die Kante der Verbundscheibe, die in Einbaulage an den Dachbereich der Karosserie grenzt, während die Motorkante an den Motorraum des Fahrzeugs oder analog dazu an den Kofferraumbereich oder die Türbereiche grenzt.

Die erfindungsgemäße Verbundscheibe ist dafür vorgesehen, in eine Öffnung, insbesondere einer Fensteröffnung eines Fahrzeugs, den Innenraum des Fahrzeugs gegenüber der äußeren Umgebung abzutrennen. Mit Innenscheibe wird im Sinne der Erfindung die den Innenraum des Fahrzeugs, d. h. dem Fahrzeuginnenraum, zugewandte Scheibe der Verbundscheibe bezeichnet. Mit Außenscheibe wird die der äußeren Umgebung zugewandte Scheibe der Verbundscheibe bezeichnet.

Die Dicke der Außenscheibe ist im vertikalen Verlauf von der Unterkante zur Oberkante zumindest abschnittsweise veränderlich. Mit abschnittsweise ist hier zu verstehen, dass der vertikale Verlauf zwischen Unterkante und Oberkante der Verbundscheibe zumindest einen Abschnitt aufweist, in dem die Dicke der Außenscheibe zunimmt oder abnimmt. Die Dicke kann sich allerdings auch in mehreren Abschnitten ändern oder im gesamten vertikalen Verlauf. Die Dicke ist kontinuierlich oder diskontinuierlich veränderbar. Mit vertikalem Verlauf ist der Verlauf zwischen Unterkante und Oberkante mit einer im Wesentlichen senkrechten Verlaufsrichtung zu beiden Kanten bezeichnet.

In einer bevorzugten Ausführungsform der Erfindung nimmt die Dicke der Außenscheibe im vertikalen Verlauf von der Unterkante zur Oberkante stetig zu oder ab. Der Richtungsverlauf der Dickenänderung kann bevorzugt in Abhängigkeit der späteren Positionierung des Projektors gewählt werden.

Die Dicke der Außenscheibe beträgt vorzugsweise an der Unterkante 0,6 mm - 3,5 mm, insbesondere 0,8 mm - 3,2 mm, insbesondere 1,0 mm - 2,8 mm, besonders bevorzugt 1,1 mm - 2,6 mm. Mit diesen Dicken werden gute Eigenschaften hinsichtlich des Reflexionsverhaltens erreicht. Geisterbilder können wirksam mit den später näher beschriebenen geringen Keilwinkeln vermieden werden. Gleichzeitig ist die Verbundscheibe ausreichend stabil, um als Fahrzeugverglasung verwendet werden zu können.

Die Dicke der Innenscheibe beträgt vorzugsweise 0,1 mm - 2,0 mm, insbesondere 0,1 mm - 1,1 mm, besonders bevorzugte 0,5 mm - 0,7 mm. Die Dicke der Innenscheibe ist vorzugsweise im vertikalen Verlauf von der Unterkante zur Oberkante im Wesentlichen konstant. Als im Wesentlichen konstante Dicke ist eine derartige Dicke zu verstehen, die lediglich aufgrund des Herstellungsprozesses abschnittsweise marginale Abweichungen aufweist.

Da es sich bei der Innenscheibe erfindungsgemäß um eine chemisch vorgespannte Scheibe handelt, kann die Dicke der Innenscheibe im Vergleich zu standardmäßigen Verbundscheiben relativ gering sein.

Die Außenscheibe weist vorzugsweise einen maximalen Keilwinkel von 0,005 mrad - 1,5 mrad, insbesondere von 0,009 mrad - 1,3 mrad, insbesondere von 0,045 mrad - 1,2 mrad, besonders bevorzugt von 0,05 - 1,0 mrad, auf.

Als Keilwinkel wird der Winkel zwischen den beiden Oberflächen der Außenscheibe bezeichnet. Ist der Keilwinkel nicht konstant, so sind zu seiner Messung an einem Punkt die Tangenten an die Oberflächen heranzuziehen. Aufgrund der erfindungsgemäßen Kombination der Dicke der Außenscheibe, der Dicke der Innenscheibe sowie der Verwendung der angegebenen maximalen Keilwinkel im Bereich der Außenscheibe wird eine Verbundscheibe zur Verfügung gestellt, die zum einen ein relativ geringes Gewicht aufweist und zum anderen das Entstehen von Geisterbildern oder Doppelbildern verhindert. Darüber hinaus kann auf den Einsatz einer thermoplastischen Zwischenschicht als Keilfolie verzichtet werden, wodurch Produktionsaufwand und Kosten gesenkt werden können.

Der maximale Keilwinkel der Verbundscheibe entspricht insbesondere dem maximalen Keilwinkel der Außenscheibe.

Der Keilwinkel der Außenscheibe kann im vertikalen Verlauf konstant sein. Dies führt zu einer linearen Dickenänderung der Außenscheibe, wobei die Dicke typischerweise von unten nach oben größer wird. Die Richtungsangabe "von unten nach oben" bezeichnet die Richtung von Unterkante zu Oberkante, also den vertikalen Verlauf. Es können aber auch komplexere Dickenprofile vorliegen, bei denen der Keilwinkel von unten nach oben veränderlich, d. h. im vertikalen Verlauf ortsabhängig, ist. Eine derartige Veränderung kann linear oder nichtlinear ausgebildet sein.

Vorzugsweise ist die veränderliche bzw. zunehmende Dicke der Außenscheibe in einem derartigen Bereich der Verbundscheibe ausgebildet, indem ein Head-up-Display-Projektor ein Bild erzeugt. Vorzugsweise nimmt die Dicke der Außenscheibe im gesamten vertikalen Verlauf, insbesondere stetig, zu.

Aufgrund der erfindungsgemäß relativ dünnen Verbundscheibe wird das Gewicht der Verbundscheibe derart verringert, dass ein geringerer Kraftstoffverbrauch des Fahrzeugs die Folge ist. Die Anforderungen an Fahrzeugscheiben hinsichtlich Stabilität und Bruchfestigkeit, insbesondere Kratzfestigkeit und Steinschlagfestigkeit, sind trotzdem gewährleistet. Diesbezüglich trägt auch eine Asymmetrie von Außenscheibe und Innenscheibe hinsichtlich ihrer jeweiligen Dicken bei.

Neben Gewichtsreduktion und Kostenreduktion reduziert sich auch automatisch der auftretende Geisterbilder-Effekt. Eine insgesamt geringere Scheibendicke führt zu einem geringeren Geisterbilder-Effekt.

Die Außenscheibe ist vorzugsweise ein Kalknatron-Glas. Ein derartiges Material bewirkt eine kostengünstige Herstellung einer Außenscheibe mit ausgebildetem Keilwinkel.

Die Außenscheibe und/oder die Innenscheibe kann aus Kalk-Natron-Glas gebildet sein. Des Weiteren ist es möglich, dass die Innenscheibe und/oder die Außenscheibe aus Borosilikatglas oder Aluminosilikatglas gebildet sind.

Die Innenscheibe der erfindungsgemäßen Verbundscheibe ist eine chemisch vorgespannte Scheibe. Dies ist möglich, da die Innenscheibe einer geringeren Steinschlagbelastung ausgesetzt ist. Beim chemischen Vorspannen wird durch lonenaustausch die chemische Zusammensetzung des Glases im Bereich der Oberfläche verändert. Eine chemisch vorgespannte Scheibe wird mit anderen Worten mit einer chemischen Vorspannung versehen.

Die Scheibe (Innenscheibe) wird beispielsweise nach einem optionalen Biegevorgang vorteilhafterweise langsam abgekühlt, bevorzugt bis zur Abkühlung auf eine Temperatur von 400 °C mit einer Abkühlrate von 0,05 °C/sec bis 0,5 °C/sec, um thermische Spannungen zu vermeiden. Anschließend kann ein weiterer Abkühlvorgang erfolgen, wobei diese anschließende Abkühlung mit höheren Abkühlraten durchführbar ist. Bei Temperaturen von unterhalb 400 °C ist die Gefahr der Erzeugung thermischer Spannungen geringer. Das chemische Vorspannen erfolgt bevorzugt bei einer Temperatur von 300 °C - 600 °C, besonders bevorzugt von 400 °C - 500 °C.

Die Scheibe wird dabei mit einer Salzschmelze behandelt. Bevorzugt wird die Scheibe in eine Salzschmelze eingetaucht. Während der Behandlung werden insbesondere Natrium-Ionen des Glases durch größere Ionen, insbesondere größere Alkali-Ionen, ausgetauscht. Dabei entsteht die gewünschte Oberflächen-Druckspannung. Die Salzschmelze ist bevorzugt die Schmelze eines Kaliumsalzes, besonders bevorzugt Kaliumnitrat (KNO₃) oder Kaliumsulfat (KSO₄). Besonders bevorzugt ist allerdings Kaliumnitrat (KNO₃). Übliche Zeitdauern hinsichtlich der Behandlung in der Salzschmelze sind 2 h - 48 h. Nach der Behandlung mit der Salzschmelze wird die Scheibe (Innenscheibe) auf Raumtemperatur abgekühlt. Anschließend wird die Scheibe gereinigt, bevorzugt mit Schwefelsäure (H₂SO₄).

Die thermoplastische Zwischenschicht ist vorzugsweise eine thermoplastische Folie. Die Zwischenschicht bzw. thermoplastische Folie kann aus Kunststoff, ausgewählt aus der Gruppe, bestehend aus Polyvinylbutyral (PVB), Ethylen-Vinylacetat (EVA), Polyethylenterephtalat (PET), Polyurethan (PU), Polypropylen (PP), Polyacrylat, Polyethylen (PE), Polycarbonat (PC), Polymethylmethacrylat (PMMA), Polyvinylchlorid, Polyacetal-Harzen (POM), Gießharzen, fluorierten Ethylen-Propylen-Copolymerisaten, Polyvinylfluorid (PVF), Ethylen-Tetrafluorethylen-Copolymerisaten sowie Copolymeren und Gemischen davon, bevorzugt aus Polyvinylbutyral (PVB), Ethylen-Vinylacetat (EVA) oder Polyurethan (PU) gefertigt sein.

In einer besonders bevorzugten Ausführungsform der Erfindung ist die thermoplastische Zwischenschicht als eine PVB-Folie ausgebildet.

In einer Ausführungsform der Erfindung wird eine Verbundscheibe, ausgewählt aus folgender Tabelle, als Verbundscheibe für ein Head-up-Display verwendet:

**Tabelle 1**

| Verbundscheibe Nr. | Dicke Außenscheibe an der Unterkante [mm] | Maximaler Keilwinkel Außenscheibe [mrad] | Keilwinkel Verbundscheibe [mrad] | Dicke Innenscheibe [mm] |
|---|---|---|---|---|
| 1 | 1,1 | 0,05 | 0,05 | 0,5 |
| 2 | 2,1 | 0,1 | 0,1 | 0,5 |
| 3 | 2,6 | 0,2 | 0,2 | 0,7 |
| 4 | 2,1 | 0,3 | 0,3 | 0,5 |
| 5 | 2,0 | 0,4 | 0,4 | 1,1 |
| 6 | 1,6 | 0,5 | 0,5 | 0,5 |
| 7 | 1,6 | 0,6 | 0,6 | 0,7 |
| 8 | 2,0 | 0,7 | 0,7 | 0,5 |
| 9 | 2,6 | 0,8 | 0,8 | 0,3 |
| 10 | 2,0 | 0,9 | 0,9 | 0,7 |
| 11 | 1,0 | 1,0 | 1,0 | 0,2 |

Die Tabelle zeigt einige mögliche Ausführungsbeispiele auf, es sind eine Vielzahl weiterer Kombinationen möglich.

Verbundscheiben mit diesen beschriebenen Dickenverhältnissen und Keilwinkeln vereinen den Vorteil hinsichtlich einer derartigen Konstruktion, die das Entstehen von Geistereffekten und Doppelbildern vermeidet. Andere Kombinationen von Dickenverhältnissen und Keilwinkeln sind möglich.

Daneben sind diese Verbundscheiben relativ leicht. Die asymmetrische Kombination aus dickerer Außenscheibe und dünnerer Innenscheibe hat sich zur Steigerung von Steinschlagfestigkeit und Bruchfestigkeit bewährt.

Mit dem maximalen Keilwinkel wird der größte Keilwinkel bezeichnet, der in der Außenscheibe vorliegt.

Die Zwischenschicht bzw. die thermoplastische Zwischenschicht kann aus einer einzelnen Folie oder aus mehreren Folien gebildet sein. Die Zwischenschicht kann auch aus einer sogenannten akustischen Folie ausgebildet sein, welche eine geräuschdämpfende Wirkung hat. Solche Folien bestehen typischerweise aus mindestens drei Lagen, wobei die mittlere Lage eine höhere Plastizität oder Elastizität aufweist als die sie umgebenden äußeren Lagen, beispielsweise in Folge eines höheren Anteils an Weichmachern.

Die Außenscheibe, die Innenscheibe sowie die thermoplastische Zwischenschicht können klar und farblos, aber auch getönt oder gefärbt sein. Die Gesamttransmission durch das Verbundglas beträgt in einer bevorzugten Ausgestaltung mehr als 70 %, insbesondere wenn die Verbundscheibe eine Windschutzscheibe ist.

Die Verbundscheibe ist bevorzugt in einer oder in mehreren Richtungen des Raumes gebogen. Typische Krümmungsradien liegen etwa im Bereich von 10 cm - 40 m.

Die Verbundscheibe kann aber auch plan ausgebildet sein. Dies ist beispielsweise der Fall, wenn die Verbundscheibe für Busse, Züge oder Traktoren ausgebildet ist. Auch bei horizontaler Anordnung der Verbundscheibe, ist abhängig von einer Projektorpositionierung unter Umständen ein Keilwinkel zur Kompensation von Geisterbildern notwendig.

In einer weiteren Ausführungsform der Erfindung kann die Verbundscheibe eine funktionelle Beschichtung aufweisen. Beispielsweise kann die Verbundscheibe eine IRreflektierende oder absorbierende Beschichtung, eine UV-reflektierende oder absorbierende Beschichtung, eine farbgebende Beschichtung, eine Beschichtung niedriger Emmissivität, eine heizbare Beschichtung, eine Beschichtung mit Antennenfunktion, eine splitterbindende Beschichtung oder eine Beschichtung zur Abschirmung von elektromagnetischer Strahlung aufweisen. Eine derartige funktionelle Beschichtung ist bevorzugt entweder auf der Innenscheibe oder auf der Außenscheibe angeordnet.

Ein weiterer Aspekt der Erfindung betrifft eine Projektionsanordnung für ein Head-up-Display. Diese Projektionsanordnung umfasst eine erfindungsgemäße Verbundscheibe und einen Projektor, der auf einen Bereich der Verbundscheibe gerichtet ist. Erfindungsgemäß nimmt die Dicke der Außenscheibe zumindest in diesem Bereich im vertikalen Verlauf zu. Der Bereich auf dem der Projektor gerichtet ist, wird auch als HUD-Bereich bezeichnet. Der Abschnitt mit veränderlicher Dicke der Außenscheibe kann auch größer als der HUD-Bereich sein.

Ein weiterer Aspekt der Erfindung betrifft ein Verfahren zur Herstellung einer erfindungsgemäßen Verbundscheibe, wobei
a) eine Außenscheibe bereitgestellt wird, deren Dicke im Verlauf zwischen zwei gegenüberliegenden Kanten zumindest abschnittsweise zunimmt;
b) eine chemisch vorgespannte Innenscheibe bereitgestellt wird;
c) eine thermoplastische Zwischenschicht zwischen der Außenscheibe und der Innenscheibe angeordnet wird und
d) die Innenscheibe und die Außenscheibe durch Lamination miteinander verbunden werden.

Die vorstehend mit Bezug auf die Verbundscheibe beschriebenen bevorzugten Ausführungen und erzielten Vorteile gelten entsprechend für das erfindungsgemäße Verfahren.

Vorzugsweise wird die thermoplastische Zwischenschicht als Folie bereitgestellt.

Die Herstellung der Verbundscheibe durch Lamination erfolgt mit üblichen, dem Fachmann an sich bekannten Methoden, beispielsweise mittels eines Autoklav-Verfahrens, Vakuumsack-Verfahrens, Vakuumring-Verfahrens, Kalander-Verfahrens, Vakuumlaminatoren-Verfahrens oder Kombinationen davon. Die Verbindung der Außenscheibe mit der Innenscheibe erfolgt dabei üblicherweise unter Einwirkung von Wärme, Vakuum und/oder Druck.

Ein weiterer Aspekt der Erfindung betrifft eine erfindungsgemäße Verwendung einer erfindungsgemäßen Verbundscheibe in einem Kraftfahrzeug, insbesondere in einem Personenkraftwagen, als Windschutzscheibe, die als Projektionsfläche eines Head-up-Displays dient.

Die vorstehend mit Bezug auf die erfindungsgemäße Verbundscheibe beschriebenen bevorzugten Ausführungen gelten entsprechend für die erfindungsgemäße Verwendung. Die erfindungsgemäße Konstruktion der Verbundscheibe weist mehrere Vorteile auf.

Zum einen kann die erfindungsgemäße Verbundscheibe aus kostengünstigen Materialien hergestellt werden. Eine Außenscheibe mit sich verändernder Dicke im vertikalen Verlauf ist unter Umständen einfacher herzustellen als eine thermoplastische Zwischenschicht (z.B. eine PVB-Folie) mit entsprechend ausgebildetem Keilwinkel.

Außerdem wird aufgrund des nunmehr kleineren Keilwinkels, der benötigt wird, die Herstellung der Verbundscheibe aufgrund des kleineren Keilwinkels vereinfacht. Mit anderen Worten können kleinere Keilwinkel einfacher hergestellt werden.

Des Weiteren kann aufgrund der Verwendung der erfindungsgemäßen Verbundscheibe eine Reduktion im Zusammenhang mit der Verbundscheibe bezüglich des Gewichtes erzielt werden. Aufgrund der erfindungsgemäßen Ausbildung einer relativ dünnen Innenscheibe und einer Außenscheibe, deren Dicke sich im vertikalen Verlauf ändert, kann der Keilwinkel erfindungsgemäß verkleinert werden. Der Keilwinkel reduziert sich beispielsweise von bekannten 0,6 mrad auf 0,3 mrad.

Des Weiteren ist es möglich, dass die Qualität des mittels eines Head-up-Displays projizierten Bildes gesteigert wird, da eine Außenscheibe mit sich ändernder Dicke mit relativ geringfügigen Toleranzbereichen hergestellt werden kann. Die Head-up-Display-Qualitätsparameter nehmen außerdem aufgrund der verhältnismäßig dünnen Glaskombinationen zu.

Im Folgenden wird die Erfindung anhand einer Zeichnung und Ausführungsbeispielen näher erläutert. Die Zeichnungen sind dabei schematische Darstellungen und nicht maßstabsgetreu. Die Zeichnung schränkt die Erfindung in keiner Weise ein.

Es zeigen:
- Fig. 1: eine Draufsicht auf eine Ausgestaltung der erfindungsgemäßen Verbundscheibe,
- Fig. 2: einen Querschnitt durch die Verbundscheibe nach Fig. 1; und
- Fig. 3: die Verbundscheibe der Fig. 2 als Bestandteil einer erfindungsgemäßen Projektionsanordnung.

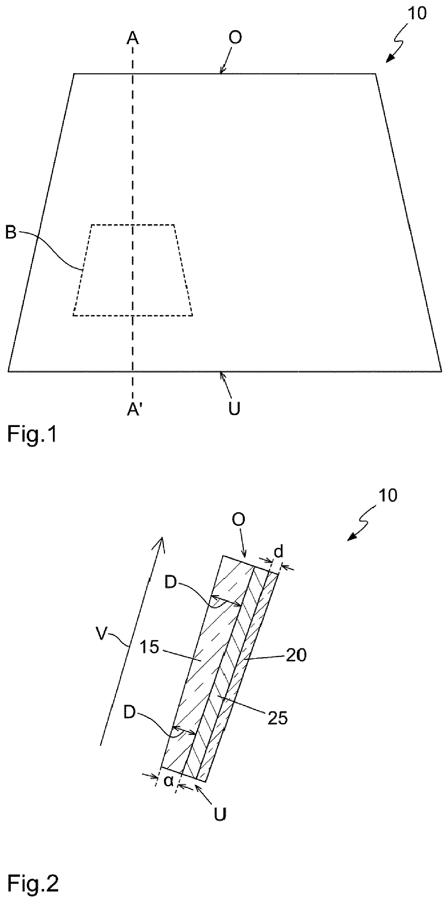

Fig. 1 und 2 zeigen je ein Detail einer erfindungsgemäßen Verbundscheibe 10. Die Verbundscheibe ist in Fig.1 aus der Blickrichtung eines Fahrzeuginsassen dargestellt.

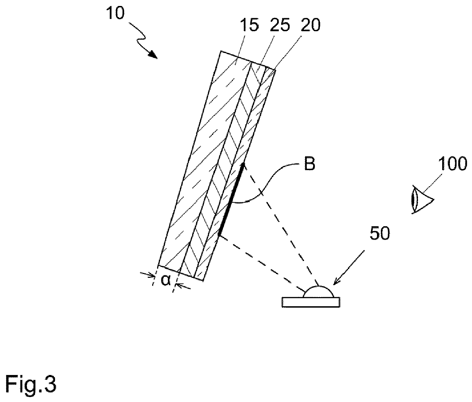

Der Bereich B beschreibt dabei den Bereich auf welchen ein Bild mittels eines Projektors (siehe Fig. 3) projiziert wird. Die dargestellte Oberkante O der Verbundscheibe 10 weist in Einbaulage nach oben zum Fahrzeugdach. Diese Oberkante O wird auch als Dachkante bezeichnet. Die Unterkante U weist in Einbaulage nach unten in Richtung des Motorraums. Diese Unterkante U wird auch als Motorkante bezeichnet.

In Fig. 2 wird ein Querschnitt durch die Verbundscheibe 10 gemäß Schnitt A-A' der Fig. 1 dargestellt.

Es ist ersichtlich, dass die Verbundscheibe 10 aus drei Komponenten besteht. Dabei handelt es sich um die Außenscheibe 15, die thermoplastische Zwischenschicht 25 sowie um die Innenscheibe 20.

Die Außenscheibe 15 besteht vorzugsweise aus Natron-Kalk-Glas. Diese Außenscheibe 15 weist an der Unterkante U bevorzugt eine Dicke von 1,1 mm - 2,6 mm auf. Es ist zu erkennen, dass die Dicke D der Außenscheibe 15 ausgehend von der Unterkante U in Richtung der Oberkante O zunimmt. Mit anderen Worten nimmt die Dicke D der Außenscheibe 15 im vertikalen Verlauf V zu. Im dargestellten Beispiel erfolgt die Dickenzunahme stetig.

Der maximale Keilwinkel α beträgt dabei besonders bevorzugt 0,05 mrad - 1,0 mrad. Die Innenscheibe 20 weist hingegen eine konstante Dicke d auf. Die Innenscheibe 20 weist in einer besonders bevorzugten Ausführungsform eine Dicke d von 0,5 mm - 0,1 mm auf. Die Außenscheibe 15 ist mit der Innenscheibe 20 mittels der thermoplastischen Zwischenschicht 25 verbunden. Bei dieser thermoplastischen Zwischenschicht 25 handelt es sich vorzugsweise um eine PVB-Folie. Es sind PVB-Folien mit Standarddicken von 0,76 mm erhältlich. Es ist möglich, eine derartige Standard-PVB-Folie als thermoplastische Zwischenschicht 25 zu verwenden. Dies gilt auch für sich von der in den Fig. 1 und 2 unterscheidenden Ausführungsformen der Erfindung.

In Fig. 3 ist die Verbundscheibe 10 der Fig. 1 und 2 als Teil einer Projektionsanordnung für ein Head-up-Display dargestellt. Die Anordnung umfasst neben der Verbundscheibe 10 einen Projektor 50, welcher auf einen Bereich B gerichtet ist. In den Bereich B, der auch als Head-up-Display-Bereich bezeichnet werden kann, kann mittels des Projektors 50 ein Bild erzeugt werden, das vom Betrachter 100, bei dem es sich um den Fahrzeugführer handelt, als virtuelles Bild auf der von ihm abgewandten Seite der Verbundscheibe 10 wahrgenommen werden.

Der Keilwinkel α im Bereich B führt zu gegeneinander geneigte Oberflächen der Außenscheibe 15 und der Innenscheibe 20. Neben Gewichtsreduktion und Kostenreduktion reduziert sich auch automatisch der auftretende Geisterbilder-Effekt. Eine insgesamt geringere Scheibendicke führt zu einem geringeren Geisterbilder-Effekt. Das Erzeugen von Geisterbildern kann mit der erfindungsgemäßen Verbundscheibe effektiv vermieden werden.

### Bezugszeichenliste

- 10: Verbundscheibe
- 15: Außenscheibe
- 20: Innenscheibe
- 25: Zwischenschicht
- 50: Projektor
- 100: Betrachter
- B: Bereich
- d: Dicke Innenscheibe
- D: Dicke Außenscheibe
- O: Oberkante
- U: Unterkante
- V: vertikaler Verlauf
- α: Keilwinkel

## Patentansprüche

1. Verbundscheibe (10) mit einer Oberkante (O) und einer Unterkante (U), umfassend mindestens eine Außenscheibe (15) und mindestens eine Innenscheibe (20), wobei die Außenscheibe (15) und die Innenscheibe (20) mittels einer thermoplastischen Zwischenschicht (25) miteinander verbunden sind, wobei
die Dicke (D) der Außenscheibe (15) im vertikalen Verlauf (V) von der Unterkante (U) zur Oberkante (O) zumindest abschnittsweise zunimmt oder abnimmt und die Innenscheibe (20) eine chemisch vorgespannte Scheibe ist.

2. Verbundscheibe (10) nach Anspruch 1, wobei
die Dicke (D) der Außenscheibe (15) im vertikalen Verlauf (V) von der Unterkante (U) zur Oberkante (O) stetig zunimmt.

3. Verbundscheibe (10) nach Anspruch 1 oder 2, wobei
die Dicke (D) der Außenscheibe (15) an der Unterkante (U) 0,6 mm - 3,5 mm, insbesondere 0,8 mm - 3,2 mm, insbesondere 1,0 mm - 2,8 mm, besonderes bevorzugt 1,1 mm - 2,6 mm, beträgt.

4. Verbundscheibe (10) nach einem der Ansprüche 1 bis 3, wobei
eine Dicke (d) der Innenscheibe (20) 0,1 mm - 2,0 mm, insbesondere 0,1 mm - 1,5 mm, besonders bevorzugt 0,5 mm - 0,1 mm, beträgt.

5. Verbundscheibe (10) nach einem der Ansprüche 1 bis 4, wobei
die Außenscheibe (15) einen maximalen Keilwinkel (α) von 0,005 mrad - 1,5 mrad, insbesondere von 0,009 mrad - 1,3 mrad, insbesondere von 0,045 mrad - 1,2 mrad, besonders bevorzugt von 0,05 mrad - 1,0 mrad, aufweist.

6. Verbundscheibe (10) nach einem der vorangegangenen Ansprüche, wobei
die Außenscheibe (15) ein Kalk-Natron-Glas ist.

7. Verbundscheibe (10) nach einem der vorangegangenen Ansprüche, wobei
die Zwischenschicht (25) Polyvinylbutyral (PVB) oder Ethylen-Vinylacetat (EVA) oder Polyurethan (PU) oder Polyethylenterephthalat (PET) oder Polypropylen (PP) oder Polyacrylat oder Polyethylen (PE) oder Polycarbonat (PC) oder Polymethylmethacrylat (PMMA) oder Polyvinylchlorid (PVC) oder Polyacetalharz (POM) oder Gießharz oder fluoriertes Ethylen-Propylen-Copolymerisat oder Polyvinylfluorid (PVF) oder Ethylen-Tetrafluorethylen-Copolymerisat oder Gemische der genannten Materialien oder Copolymere der genannten Materialien oder Derivate der genannten Materialien aufweist.

8. Projektionsanordnung für ein Head-Up-Display, mindestens umfassend eine Verbundscheibe (10) nach einem der Ansprüche 1 bis 7 und einen Projektor (50), der auf einen Bereich (B) der Verbundscheibe (10) gerichtet ist, wobei die Dicke (D) der Außenscheibe (15) zumindest in diesem Bereich (B) im vertikalen Verlauf (V) zunimmt oder abnimmt.

9. Verfahren zur Herstellung einer Verbundscheibe (10) nach einem der Ansprüche 1 bis 7, wobei
a) eine Außenscheibe (15) bereitgestellt wird, deren Dicke (D) im Verlauf (V) zwischen zwei gegenüberliegenden Kanten (U, O) zumindest abschnittsweise zunimmt;
b) eine chemisch vorgespannte Innenscheibe (20) bereitgestellt wird;
c) eine thermoplastische Zwischenschicht (25) zwischen der Außenscheibe (15) und der Innenscheibe (20) angeordnet wird und
d) die Innenscheibe (20) und die Außenscheibe (15) durch Lamination miteinander verbunden werden.

10. Verwendung einer Verbundscheibe (10) nach einem der Ansprüche 1 bis 7 in einem Kraftfahrzeug, insbesondere in einem Personenkraftwagen, als Windschutzscheibe, die als Projektionsfläche eines Head-Up-Displays dient.
